Europäisches Patentamt

European Patent Office

Office européen des brevets

(11) Numéro de publication : **0 327 416 B1**

# FASCICULE DE BREVET EUROPEEN

(45) Date de publication du fascicule du brevet :
**13.01.93 Bulletin 93/02**

(51) Int. Cl.$^5$ : **G01N 21/88**

(21) Numéro de dépôt : **89400120.5**

(22) Date de dépôt : **16.01.89**

(54) **Procédé d'optimisation du contraste dans une image d'un échantillon.**

(30) Priorité : **18.01.88 FR 8800496**

(43) Date de publication de la demande :
**09.08.89 Bulletin 89/32**

(45) Mention de la délivrance du brevet :
**13.01.93 Bulletin 93/02**

(84) Etats contractants désignés :
**DE GB NL**

(56) Documents cités :
**WO-A-87/01806**
**US-A- 4 028 728**
**IEEE CIRCUITS AND DEVICES MAGAZINE,
vol. 2, no. 1, pages 44-48, janvier 1986, New
York, US; V.C. BOLHOUSE: "Machine VisionAutomates Inspection of Thick-Film Hybrids"
FEINWERKTECHNIK & MESSTECHNIK, vol.
92, no. 8, pages 401-403, décembre 1984, München, DE; P. BAURSCHMIDT et al.:"Optische
Halbleitermaterialprüfung mit der
Mikroskop-Spektralphotometrie"**

(73) Titulaire : **COMMISSARIAT A L'ENERGIE
ATOMIQUE Etablissement de Caractère
Scientifique Technique et Industriel
31/33, rue de la Fédération
F-75015 Paris (FR)**

(72) Inventeur : **Darboux, Michel
37, Quai Claude Bernard
F-38000 Grenoble (FR)**
Inventeur : **Grand, Gilles
46 Rue Doyen Gosse
F-38600 Fontaine (FR)**
Inventeur : **Moisan, Frédéric
12, Rue Garibaldi
F-38600 Fontaine (FR)**

(74) Mandataire : **Mongrédien, André et al
c/o BREVATOME 25, rue de Ponthieu
F-75008 Paris (FR)**

**EP 0 327 416 B1**

## Description

La présente invention concerne un procédé d'optimisation du contraste dans une image d'un échantillon présentant au moins deux zones adjacentes ayant respectivement des coefficients de réflectance ou de transmittance différents.

Cette invention s'applique notamment au contrôle optique de structures constituées de zones uniformes distinctes dont les propriétés optiques varient en fonction de la longueur d'onde d'éclairage. L'invention s'applique plus particulièrement au contrôle optique des circuits intégrés entre certaines des étapes de fabrication de ces circuits. Dans un circuit intégré, chaque zone uniforme est en effet constituée d'un empilement de couches déposées sur un substrat, en silicium par exemple.

Pour obtenir l'image d'un échantillon, on sait qu'il est généralement nécessaire d'utiliser une source de lumière éclairant l'échantillon et un système optique de formation de l'image de cet échantillon. Pour le contrôle des circuits intégrés en micro-électronique, le système optique est un microscope. L'enregistrement de l'image est réalisé à la sortie du système optique (le microscope dans l'application considérée), au moyen d'un capteur d'images, tel qu'une plaque photographique par exemple, ou une caméra qui fournit sur ses sorties des signaux d'enregistrement correspondant à l'image. Cette caméra peut d'ailleurs être une caméra de type à transfert de charges (caméra CCD -Charges Coupled Device en anglais).

Le contraste obtenu dans l'image, entre les différentes zones uniformes de l'échantillon, dépend du type d'éclairage choisi et notamment du spectre de longueurs d'ondes de cet éclairage, vis-à-vis des propriétés optiques (réflectance ou transmittance) de l'échantillon.

Il est très important, notamment dans le contrôle de fabrication des circuits intégrés, d'obtenir le meilleur contraste entre deux zones par exemple, d'une image de ce circuit, pour pouvoir détecter des défauts éventuels de fabrication, apparaissant notamment à la limite de ces deux zones.

Généralement, le contrôle est effectué en comparant une image enregistrée du circuit à contrôler et l'image enregistrée correspondante d'un circuit considéré comme parfait.

Le moyen le plus simple et le plus couramment utilisé en micro-électronique pour acquérir des images faisant apparaître différentes zones d'un circuit, est la microscopie en fond clair, en réflexion. L'éclairage de l'objet se fait à travers l'objectif d'un microscope, sous incidence quasi normale à l'échantillon du circuit à contrôler.

La mémorisation des images se fait en temps réel, par exemple grâce à une caméra vidéo, de type à transfert de charges, couplée à une électronique d'acquisition transférant l'image dans une mémoire informatique.

Les défauts sont détectés à partir de la différence numérique entre des signaux numériques correspondant à l'image acquise du circuit à contrôler et des signaux numériques correspondant à une image de référence correspondante d'un circuit considéré comme sans défaut. Un tel procédé est décrit dans WO-A-8 701 806.

Dans ces conditions, sachant que la plupart des défauts dits de fabrication sont constitués par des inclusions d'une zone dans une zone voisine, il est clair que l'obtention dans ce cas d'un bon contraste entre les différentes zones, facilite la détection des défauts.

Pour optimiser ce contraste, on effectue un filtrage en longueur d'onde de la source de lumière qui éclaire l'échantillon. On entend par optimisation du contraste, la détermination du contraste désiré, celui-ci n'étant pas nécessairement maximum.

Il n'existe pas actuellement de méthode automatique permettant de choisir un filtrage en longueur d'onde de la lumière de la source, optimisé en fonction de l'échantillon à observer.

L'invention a pour but de remédier à ces inconvénients et notamment de fournir un procédé selon lequel il est possible d'obtenir automatiquement et très rapidement, les caractéristiques d'un filtre qui permet d'obtenir le contraste souhaité de l'image de l'échantillon.

L'invention concerne un procédé d'optimisation du contraste dans une image d'un échantillon à contrôler présentant un nombre entier $\underline{n}$ de zones i, avec $n \geq 2$, ayant des coefficients de réflectance ou de transmittance différents, ces zones étant éclairées par une source de lumière et l'image étant obtenue à la sortie d'un système optique pour être analysée par un capteur fournissant sur des sorties, des signaux d'enregistrement de cette image, caractérisé en ce qu'il consiste préalablement à l'obtention de l'image de l'échantillon :

- à définir un ensemble de fonctions $F(\lambda)$ représentant chacune la transmittance en fonction de la longueur d'onde, d'un filtre optique à interposer entre la source et l'échantillon,
- à calculer pour ces fonctions $F(\lambda)$, des valeurs d'amplitudes $Ni(F(\lambda))$, avec $1 \leq i \leq n$, qui seraient égales à celles de signaux correspondants de sorties du capteur, respectivement pour chaque zone i de l'échantillon, avec un filtre de transmittance $F(\lambda)$, ces amplitudes étant calculées à partir de la relation :

2

$$N_i(F(\lambda)) = I(F(\lambda)) \cdot \int_A^B C(\lambda) \cdot M(\lambda) \cdot F(\lambda) \cdot R_i(\lambda) \cdot i_o(\lambda) d\lambda$$

dans laquelle :

$C(\lambda)$ désigne la réponse spectrale du capteur,

$M(\lambda)$ désigne la réponse spectrale du système optique,

$R_i(\lambda)$ désigne la réflectance ou la transmittance spectrale de la zone i

$i_o(\lambda)$ désigne la densité spectrale de puissance de la source,

$\lambda A$ et $\lambda B$ sont deux longueurs d'ondes limites choisies préalablement,

$I(F(\lambda))$ est un facteur d'atténuation calculé pour chacune des fonctions $F(\lambda)$ pour que la puissance de l'éclairement de l'échantillon soit compatible avec la zone utile de fonctionnement du capteur ($I(F(\lambda))$ est compris au sens large entre 0 et 1.

- à calculer pour chaque fonction $F(\lambda)$, à partir des amplitudes $N_i$ correspondantes, des valeurs d'un facteur $Q_{ij}$ défini par la relation :

$$Q_{ij} = \frac{|N_i - N_j|}{N_{sat}},$$

avec $1 \leq i \leq n$ et $1 \leq j \leq n$ et $i < j$,

chaque valeur du facteur $Q_{ij}$ étant représentative du contraste entre des zones i et j et $N_{sat}$ désignant l'amplitude de signal de valeur la plus élevée que peut fournir le capteur lorsqu'il est saturé.

- à sélectionner pour chaque fonction $F(\lambda)$, une valeur Q du facteur $Q_{ij}$, correspondant au contraste souhaité et appelée facteur de qualité,

- à choisir parmi ces facteurs de qualité le facteur de qualité Q permettant d'optimiser le contraste, cette optimisation fournissant la transmittance $F(\lambda)$ du filtre à sélectionner,

- à interposer le filtre sélectionné entre la source et l'échantillon à contrôler, pour obtenir l'image de l'échantillon.

Selon une autre caractéristique de l'invention, les paramètres $C(\lambda)$, $M(\lambda)$, $i_o(\lambda)$ sont des paramètres fournis respectivement avec le capteur, le système optique et la source, $R_i(\lambda)$ étant un paramètre calculé à partir des paramètres optiques de chaque zone i de l'échantillon, ou calculés respectivement lors d'un étalonnage préalable desdits capteurs, système optique et source, ou mesurés à l'aide d'un spectrophotomètre, préalablement au contrôle de l'échantillon.

Les paramètres optiques d'une zone dans le cas de la microélectronique sont formés par l'épaisseur et par l'indice de réfraction complexe des différentes couches la constituant. Dans le cas où la réflectance ou la transmittance sont mesurées à l'aide d'un spectrophotomètre, l'utilisation d'un spectrophotomètre rapide par exemple de type multicanal permet d'effectuer les mesures en temps réel.

Selon une autre caractéristique, pour chaque fonction $F(\lambda)$, le facteur d'atténuation $I(F(\lambda))$ est calculé de manière que la valeur maximum des amplitudes $N_i(F(\lambda))$ soit égale à une valeur fixe $kN_{sat}$, avec $0 < k \leq 1$, k étant une valeur prédéterminée et $N_{sat}$ étant la valeur de l'amplitude la plus élevée du signal que peut fournir le capteur à saturation.

Cependant, si quelle que soit la valeur du facteur d'atténuation $I(F(\lambda))$, qui est comprise au sens large entre 0 et 1, la valeur maximum est toujours inférieure à la valeur choisie $kN_{sat}$, alors on fixe la valeur de I à 1 (I=1).

Selon une autre caractéristique, le facteur de puissance $I(F(\lambda))$ est calculé de manière que la valeur moyenne des amplitudes $N_iF(\lambda)$ soit égale à une valeur fixe $kN_{sat}$, avec $0 < k \leq 1$.

Cependant, si quelle que soit la valeur du facteur d'atténuation $I(F(\lambda))$, qui est comprise au sens large entre 0 et 1, la valeur moyenne est toujours inférieure à la valeur choisie $kN_{sat}$, alors on fixe la valeur de I à 1 (I=1).

Selon une autre caractéristique, la valeur du facteur de qualité Q permettant d'optimiser le contraste est obtenue en sélectionnant pour chaque fonction $F(\lambda)$, parmi les valeurs des facteurs $Q_{ij}$, la valeur minimum des $Q_{ij}$ et en choisissant la fonction $F(\lambda)$ correspondant au maximum de ces valeurs minimum des $Q_{ij}$.

Selon une autre caractéristique, la valeur du facteur de qualité Q permettant d'optimiser le contraste est obtenue en sélectionnant pour chaque fonction $F(\lambda)$, parmi les valeurs $Q_{ij}$, la valeur maximum des $Q_{ij}$ et en choisissant la fonction $F(\lambda)$ correspondant au minimum de ces valeurs maximum des $Q_{ij}$.

Les caractéristiques et avantages de l'invention ressortiront mieux de la description qui va suivre donnée en référence aux figures annexées dans lesquelles :

- la figure 1 représente schématiquement un dispositif permettant de mettre en oeuvre le procédé de l'invention,

- la figure 2 est un organigramme des étapes essentielles du procédé de l'invention.

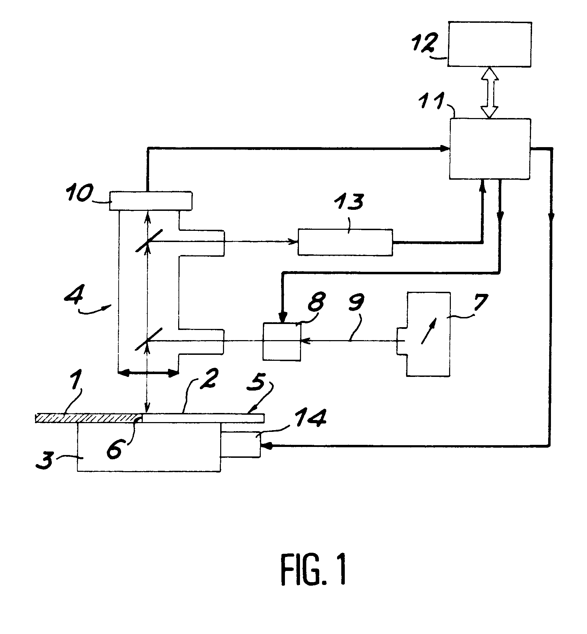

Le dispositif représenté schématiquement sur la figure 1 comprend un système optique tel qu'un microscope 4 sur la table mobile 3 duquel est posé un échantillon 5 à contrôler pour lequel on veut obtenir une image en réflectance par exemple. Cet échantillon présente, dans l'exemple représenté sur la figure, deux zones 1, 2 de dimensions microscopiques délimitées par une frontière 6, ces deux zones 1,2 présentant des coefficients de réflectance différents.

L'échantillon 5 est éclairé par une source 7 de lumière, par exemple blanche dont l'intensité peut être réglable. Dans son utilisation pour le contrôle de l'échantillon 5, le dispositif comporte aussi un dispositif de filtrage 8 interposé entre le microscope 4 et la source 7 sur le faisceau 9 de lumière émise par cette source 7. La source 7 éclaire donc l'échantillon 5 à travers le dispositif de filtrage 8 et une partie du microscope 4. Ce dispositif de filtrage 8 ainsi que le calcul de ses fonctions F($\lambda$) seront décrits plus loin en détail.

Les rayons réfléchis par l'échantillon 5 traversent le microscope 4 qui fournit une image de l'échantillon. Un capteur 10, tel qu'une caméra vidéo de type à transfert de charges par exemple, transforme cette image en signaux vidéo.

Les signaux fournis par la caméra sont appliqués à un calculateur 11, tel qu'un microprocesseur par exemple, pour être enregistrés dans une mémoire 12 de ce microprocesseur. Cette mémoire comprend également, comme on le verra plus loin en détail, un programme qui permet au microprocesseur d'optimiser le contraste de l'image de l'échantillon 5, en sélectionnant une fonction F($\lambda$) du dispositif de filtrage qui sera interposé entre la source et le microscope, lors du contrôle de l'échantillon.

Ce dispositif comprend aussi un spectrophotomètre 13 qui reçoit, à travers le microscope 4, des rayons réfléchis par l'échantillon 5. Les signaux de sortie de ce spectrophotomètre 13 sont appliqués au microprocesseur 11, pour calculer instantanément les coefficients de réflectance des zones de l'échantillon 5, comme on le verra plus loin en détail. Dans l'exemple décrit, on suppose que l'on détermine la réflectance de l'échantillon 5. Il en est de même pour déterminer la transmittance : la réflectance est déterminée à partir de la lumière réfléchie du faisceau lumineux par l'échantillon 5. La transmittance est déterminée à partir de la lumière transmise par l'échantillon 5 lorsque le faisceau lumineux 9 de la source 7 traverse l'échantillon 5.

Le procédé de l'invention consiste à l'aide de ce dispositif, à optimiser le contraste de l'image de l'échantillon 5 à contrôler, cet échantillon 5 présentant au moins deux zones de réflectance ou de transmittance différentes 1, 2.

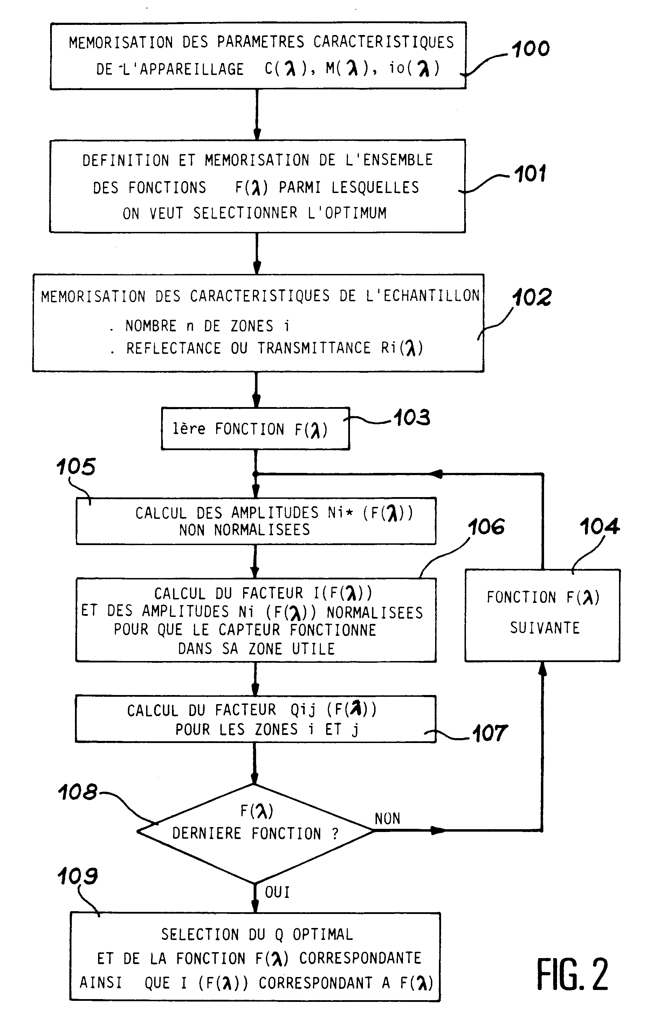

Selon ce procédé dont les étapes essentielles sont représentées sur la figure 2, on va sélectionner la transmittance F($\lambda$) d'un filtre à interposer entre le microscope et l'échantillon 5 permettant d'optimiser le contraste de l'image de cet échantillon 5.

Pour cela, on choisit tout d'abord deux longueurs d'ondes limites $\lambda A$ et $\lambda B$ (choisies en fonction du spectre de longueur d'ondes de la source 7, ou de l'appareillage, ou de l'échantillon) et, pour différentes longueurs d'ondes comprises entre ces longueurs d'ondes limites, on mémorise comme le montre l'étape 100 du procédé, les paramètres caractéristiques de l'appareillage :

- C($\lambda$) : la réponse spectrale du capteur. En fait, cette réponse spectrale est donnée par le constructeur du capteur, mais elle peut également être obtenue par des mesures d'étalonnage préalable qui donnent, en fonction de la longueur d'onde, l'amplitude des signaux de sortie du capteur, pour un éclairage d'intensité prédéterminée.

- M($\lambda$) : la réponse spectrale du microscope. Cette réponse spectrale peut être donnée par le constructeur du microscope ou obtenue par étalonnage préalable, en déterminant, en fonction de la longueur d'onde, le rapport de la puissance des rayonnements lumineux fournis par le microscope à la puissance des rayonnements lumineux qui sont fournis au microscope par la source.

- io($\lambda$) : la densité spectrale de la source de lumière 7 : cette densité spectrale est la variation de la puissance lumineuse émise par la source, en fonction de la longueur d'onde ; elle est donnée par le constructeur de la source ou déterminée par un étalonnage préalable de la source.

On définit ensuite, comme l'indique l'étape 101, l'ensemble des fonctions de transmittance F($\lambda$) de filtres, parmi lesquelles on va rechercher celle qui doit procurer un contraste optimal entre les n zones i de l'échantillon à contrôler. L'obtention de la fonction de transmittance procurant le contraste optimal permet, comme on le verra plus loin en détail, de sélectionner le filtre de transmittance souhaité, entre la source et le microscope. La fonction de transmittance F($\lambda$) est en fait la réponse spectrale du filtre, c'est-à-dire l'évolution, en fonction de la longueur d'onde, de l'intensité de la lumière transmise par le filtre rapportée, à l'intensité de la lumière incidente. La définition de l'ensemble des fonctions F($\lambda$) dépend du type de moyen de filtrage dont on dispose :

- lorsque le moyen de filtrage est constitué d'un nombre fini de filtres (une tourelle de filtres par exemple), la fonction F($\lambda$) est dans ce cas mesurée préalablement pour chaque filtre (en mesurant par exemple pour chaque filtre le rapport de l'intensité de la lumière transmise par le filtre, à l'intensité de la lumière reçue par celui-ci). Cette fonction peut aussi être donnée par le constructeur du filtre,

- le moyen de filtrage peut aussi être un élément de filtrage dont la fonction F($\lambda$) peut être ajustée dans un intervalle de longueurs d'ondes ($\lambda$A, $\lambda$B), en fonction de différents paramètres ; dans le cas par exemple d'une fonction gaussienne, ces paramètres sont la longueur d'onde centrale ($\lambda$o), la largeur $\Delta\lambda$, et éventuellement l'amplitude.

Cet élément de filtrage est par exemple un filtre interférentiel à bande passante variable dont on fait varier la longueur d'onde centrale $\lambda$o en déplaçant le filtre latéralement devant le faisceau de la source et dont on fait varier la largeur $\Delta\lambda$ en réglant le diamètre du faisceau.

On mémorise ensuite, comme le montre l'étape 102 du procédé, les caractéristiques essentielles de l'échantillon, c'est-à-dire le nombre n de zones i qu'il comporte et ses coefficients de réflectance ou de transmittance Ri($\lambda$) en fonction de la longueur d'onde. Comme indiqué plus haut, ces coefficients sont calculés à partir des paramètres optiques respectifs des zones de l'échantillon, ou mesurés à l'aide du spectrophotomètre 13.

Les signaux fournis par ce spectrophotomètre, pour chacune des zones de l'échantillon et pour différentes longueurs d'onde et qui représentent la réflectance ou la transmittance de l'échantillon pour chacune des zones, sont enregistrés dans la mémoire 12 du microprocesseur 11. Il en est de même bien entendu des autres paramètres mentionnés plus haut.

La réflectance ou la transmittance, sont mesurées en absence de filtrage sur le trajet des rayons lumineux.

Le capteur reçoit l'image d'une zone limitée de l'échantillon (champ du microscope).

Le spectrophotomètre reçoit la lumière réfléchie par une zone encore plus limitée de l'échantillon. En effet, il faut pouvoir trouver, au voisinage du champ inspecté, des zones de références dont la taille est supérieure au champ correspondant au spectrophotomètre. La mesure par spectrophotométrie est réalisée préalablement à la prise d'image du champ de l'échantillon à contrôler.

On calcule ensuite, pour chaque fonction F($\lambda$) (étapes 103 et 104) à partir d'une première de ces fonctions (étape 103), pour chacune des n zones i de l'échantillon à contrôler, des valeurs d'amplitudes Ni*(F($\lambda$)) (étape 105), qui seraient égales à celles de signaux correspondants de sorties du capteur, avec un filtre de transmittance F($\lambda$). On ne cherche pas encore dans cette étape, à calculer des amplitudes dites "normalisées" des signaux de sortie du capteur, correspondant à un fonctionnement de celui-ci dans sa zone utile, c'est-à-dire à une non saturation du capteur.

Les valeurs des amplitudes Ni*(F($\lambda$)) dites non normalisées sont données par la relation :

$$Ni^*(F(\lambda)) = \int_{\lambda A}^{\lambda B} C(\lambda).M(\lambda).F(\lambda).Ri(\lambda)i_o(\lambda)d\lambda \quad (1)$$

Le programme de calcul de cette intégrale ne sera pas donné en détail car le calcul de cette intégrale est à la portée de l'homme de l'art, le microprocesseur ne faisant qu'accélérer considérablement l'obtention des résultats des calculs.

Dans cette relation, C($\lambda$), M($\lambda$), $i_o(\lambda)$ sont enregistrés en mémoire à l'étape 100. F($\lambda$) et Ri($\lambda$) ont été respectivement mémorisés au cours des étapes 101 et 102.

Pour chaque fonction F($\lambda$), on calcule (étape 106, dite de normalisation) un facteur d'atténuation correspondant I(F($\lambda$)) de la source. Ce facteur d'atténuation est la valeur de la puissance lumineuse fournie par la source divisée par la puissance lumineuse maximale de cette source (sans atténuation). Les valeurs des amplitudes normalisées Ni(F($\lambda$)) sont données par la relation Ni(F($\lambda$))=I(F($\lambda$))Ni*(F($\lambda$)).

Calculer le facteur d'atténuation de la source revient à déterminer le réglage de l'intensité de la source pour que le capteur fonctionne dans sa zone utile (capteur non saturé). L'intensité de la lumière parvenant au capteur n'est ni trop forte (car il y aurait saturation) ni trop faible (car le rapport signal/bruit en sortie du capteur serait trop faible). Cette opération peut être qualifiée de "normalisation" des valeurs des amplitudes des signaux de sortie du capteur.

Cette opération de normalisation peut être effectuée de deux méthodes différentes.

A) - On peut calculer I(F($\lambda$)) pour que la valeur maximum Max Ni (pour i variant de 1 à n) des amplitudes Ni(F($\lambda$)) des signaux de sorties du capteur, soit égale à une valeur fixe $kN_{sat}$, avec $0{\leq}k{\leq}1$, k étant fixé préalablement et $N_{sat}$ étant la valeur de l'amplitude des signaux de sorties, correspondant à la saturation du capteur.

On a donc

5

EP 0 327 416 B1

$$\underset{i=1,n}{\text{Max Ni}} = kN_{sat}$$

En pratique, on choisit k voisin de 0,8.

B) - On peut aussi calculer $I(F(\lambda))$ pour que la valeur moyenne des amplitudes $Ni(F(\lambda))$ soit égale à une valeur fixe prédéterminée $kN_{sat}$.

On a alors :

$$\frac{1}{n} \sum_{i=1}^{i=n} Ni = kN_{sat}$$

En pratique on choisit k =1/2.

Pour calculer $I(F(\lambda))$, on part alors des valeurs d'amplitudes $Ni*(F(\lambda))$ non normalisées données par la relation (1) et obtenues à l'étape 105, et on opère de la manière suivante selon la méthode A ou B choisie :

Si on choisit la méthode A, on résout l'équation :

$$I(F(\lambda)) \ \underset{i=1,n}{\text{MaxNi}}^* (F(\lambda)) = kN_{sat}$$

donc :

$$I(F(\lambda)) = \frac{kN_{sat}}{\underset{i=1,n}{\text{Max}} \ Ni^*(F(\lambda))}$$

Si on choisit la méthode B, on résout l'équation :

$$\frac{I(F(\lambda))}{n} \sum_{i=1}^{i=n} Ni^*(F(\lambda)) = kN_{sat}$$

d'où

$$I(F(\lambda)) = \frac{k.n.N_{sat}}{\sum_{i=1}^{i=n} Ni^*(F(\lambda))}$$

Ensuite (étape 107), on calcule pour chaque fonction $F(\lambda)$ et pour des zones i et j de l'échantillon, des valeurs correspondantes $Q_{ij}$ d'un facteur de contraste entre ces zones définies par la relation :

$$Q_{ij} = \frac{|Ni - Nj|}{N_{sat}}$$

avec $1 \leqq i \leqq n$, $1 \leqq j \leqq n$ et i<j. La valeur $Q_{ij}$ est représentative du contraste entre ces deux zones.

L'étape 108 est un test consistant à déterminer si pour les fonctions $F(\lambda)$ mémorisées à l'étape 101, les calculs effectués des étapes 105 à 107 pour l'une de ces fonctions, sont à recommencer pour une fonction $F(\lambda)$ mémorisée suivante (réponse NON à la question posée à l'étape 108), ou si au contraire, la fonction $F(\lambda)$ était la dernière fonction mémorisée (réponse OUI à la question posée à l'étape 108).

Si le calcul des $Q_{ij}$ vient d'être effectué pour la dernière fonction $F(\lambda)$ mémorisée, on va rechercher le fac-

6

teur de qualité Q optimal qui permet d'optimiser le contraste (étape 109). Cette recherche de la valeur optimale du facteur de qualité peut s'effectuer de différentes façons :

. si l'on souhaite obtenir un contraste maximum, on sélectionne, pour chaque fonction F($\lambda$), la valeur $Q_{ij}$ minimum parmi les différents couples (i, j) et on choisit ensuite la fonction F($\lambda$) qui correspond à la valeur maximum de ces valeurs minimum sélectionnées.

. si l'on souhaite obtenir un contraste minimum, on sélectionne, pour chaque fonction F($\lambda$), la valeur $Q_{ij}$ maximum parmi les différents couples (i, j) et on choisit ensuite la fonction F($\lambda$) qui correspond à la valeur minimum des valeurs maximum sélectionnées.

Dans le cas où l'on veut ajuster le contraste entre deux zones i et j prédéterminées (cas par exemple d'un échantillon présentant deux zones i=1, j=2), l'étape de sélection d'une valeur $Q_{ij}$ pour une fonction F( ) donnée est inutile car à chaque fonction F($\lambda$) correspond un seul facteur $Q_{ij}$. Il suffit donc de choisir F($\lambda$) correspondant à la valeur désirée de $Q_{ij}$.

On sélectionne également I(F($\lambda$)) correspondant à la fonction F($\lambda$) qui permet d'obtenir le facteur de qualité optimal.

Bien entendu, l'ordre des différentes étapes du procédé peut être modifié. En particulier, le choix d'un facteur de qualité parmi les différents facteurs $Q_{ij}$ pour chaque fonction F($\lambda$) peut être réalisé avant l'étape 108, le choix du facteur de qualité optimal permettant de déterminer la fonction F($\lambda$) optimale étant alors réalisé comme décrit précédemment après cette étape 108.

Le filtre présentant la bande passante requise ayant été ainsi déterminé, ce filtre peut alors être interposé sur le trajet du faisceau entre la source 7 et le microscope 4. La sélection du filtre requis peut être effectuée automatiquement par le microprocesseur. Le dispositif de filtrage peut être par exemple une tourelle mobile, commandée par le microprocesseur, comportant des filtres présentant différentes bandes passantes. Le microprocesseur commande alors le mouvement de la tourelle pour que soit interposé sur le trajet du faisceau lumineux le filtre requis.

Le dispositif de filtrage peut être aussi un filtre interférentiel à bande passante variable, commandé par le microprocesseur qui ajuste ladite bande passante.

Dans le cas où on dispose d'un nombre limité de filtres (cas de la tourelle de filtres) on effectue la recherche du facteur de qualité Q optimal, à partir du calcul des différents facteurs de qualité correspondant aux différents filtres de la tourelle.

Dans le cas où le dispositif de filtrage est un filtre interférentiel à bande passante variable, le facteur de qualité Q optimal est celui qui présente une valeur maximum par exemple, parmi les valeurs des différents facteurs de qualité Q calculés pour tous les filtres possibles.

## Revendications

1. Procédé d'optimisation du contraste dans une image d'un échantillon (5) à contrôler présentant un nombre entier n de zones i, avec n>2, ayant des coefficients de réflectance ou de transmittance différents, ces zones étant éclairées par une source (7) de lumière et l'image étant obtenue à la sortie d'un système optique (4) pour être analysée par un capteur (10) fournissant sur des sorties, des signaux d'enregistrement de cette image, caractérisé en ce qu'il consiste préalablement à l'obtention de l'image de l'échantillon (5):

- à définir un ensemble de fonctions F($\lambda$) représentant chacune la transmittance en fonction de la longueur d'onde, d'un filtre optique à interposer entre la source (7) et l'échantillon (5),

- à calculer pour ces fonctions F($\lambda$), des valeurs d'amplitudes Ni(F($\lambda$)), avec 1<i<n, qui seraient égales à celles de signaux correspondants de sorties du capteur (10), respectivement pour chaque zone i de l'échantillon (5), avec un filtre de transmittance F($\lambda$), ces amplitudes étant calculées à partir de la relation :

$$Ni(F(\lambda)) = I(F(\lambda)) \int_{\lambda A}^{\lambda B} C(\lambda).M(\lambda).F(\lambda).Ri(\lambda)i_o(\lambda)d\lambda$$

dans laquelle on définit les paramètres :

C($\lambda$) désigne la réponse spectrale du capteur (10),

M($\lambda$) désigne la réponse spectrale du système optique (4),

Ri($\lambda$) désigne la réflectance ou la transmittance spectrale de la zone i

i$_o$ (λ) désigne la densité spectrale de puissance de la source (7),

λA et λB sont deux longueurs d'ondes limites choisies préalablement,

I(F(λ)) est un facteur d'atténuation calculé pour chacune des fonctions F(λ) pour que la puissance de l'éclairement de l'échantillon (5) soit compatible avec la zone utile de fonctionnement du capteur (10), (I(F(λ)) étant compris entre 0 et 1.

- à calculer pour chaque fonction F(λ), à partir des amplitudes Ni correspondantes, des valeurs d'un facteur Q$_{ij}$ défini par la relation :

$$D_{ij} = \frac{|Ni - Nj|}{N_{sat}},$$

avec 1≦i≦n et 1≦j≦n et i<j,

chaque valeur du facteur Q$_{ij}$ étant représentative du contraste entre des zones i et j et N$_{sat}$ désignant l'amplitude de signal de valeur la plus élevée que peut fournir le capteur (10) lorsqu'il est saturé.

- à sélectionner pour chaque fonction F(λ), une valeur Q du facteur Q$_{ij}$, correspondant au contraste souhaité et appelée facteur de qualité,

- à choisir parmi les facteurs de qualité, le facteur de qualité Q permettant d'optimiser le contraste, cette optimisation fournissant la transmittance F(λ) du filtre à sélectionner,

- à interposer le filtre sélectionné entre la source (7) et l'échantillon (5) à contrôler, pour obtenir l'image de l'échantillon (5).

2. Procédé selon la revendication 1, caractérisé en ce que les paramètres C(λ), M(λ), i$_o$(λ) sont fournis respectivement avec le capteur (10), le système optique (4) et la source (7) ou respectivement calculés lors d'un étalonnage préalable, Ri(λ) étant un paramètre calculé à partir des paramètres optiques de chaque zone de l'échantillon (5), ou mesuré à l'aide d'un spectrophotomètre (13), préalablement au contrôle de l'échantillon (5).

3. Procédé selon la revendication 2, caractérisé en ce que le facteur d'atténuation I(F(λ)) est calculé pour chaque fonction F(λ) de manière que la valeur maximum des amplitudes Ni(F(λ)) soit égale à une valeur fixe kN$_{sat}$, avec 0<k≦1, k étant une valeur prédéterminée et N$_{sat}$ étant la valeur de l'amplitude la plus élevée du signal que peut fournir le capteur (10) à saturation.

4. Procédé selon la revendication 2, caractérisé en ce que le facteur de puissance I(F(λ)) est calculé de manière que la valeur moyenne des amplitudes Ni(F(λ)) soit égale à une valeur fixe kN$_{sat}$, avec 0<k≦1.

5. Procédé selon l'une quelconque des revendications 3 et 4, caractérisé en ce que la valeur du facteur de qualité Q permettant d'optimiser le contraste est obtenue en sélectionnant pour chaque fonction F(λ), parmi les valeurs des facteurs Q$_{ij}$, la valeur minimum des Q$_{ij}$ et en choisissant la fonction F(λ) correspondant au maximum de ces valeurs minimum des Q$_{ij}$.

6. Procédé selon l'une quelconque des revendications 3 et 4, caractérisé en ce que la valeur du facteur de qualité Q permettant d'optimiser le contraste est obtenue en sélectionnant pour chaque fonction F(λ), parmi les valeurs Q$_{ij}$, la valeur maximum des Q$_{ij}$ et en choisissant la fonction F(λ) correspondant au minimum de ces valeurs maximum des Q$_{ij}$.

**Patentansprüche**

1. Verfahren zur Kontrastoptimierung in einem Bild einer zu prüfenden Probe (5), die eine ganze Zahl n von Zonen i, mit n>2, aufweist, die verschiedene Reflexions- oder Transmissionskoeffizienten haben, wobei diese Zonen durch eine Lichtquelle (7) beleuchtet werden und das Bild am Ausgang eines optischen Systems (4) erhalten wird, um durch einen Sensor (10), der auf den Ausgängen Aufzeichnungssignale von diesem Bild liefert, analysiert zu werden, das dadurch gekennzeichnet ist, daß es vor der Gewinnung des Bildes der Probe (5) darin besteht:

- eine Gruppe von Funktionen F( ) zu definieren, die jede für die Transmission eines zwischen die Lichtquelle (7) und die Probe (5) zu stellenden optischen Filters als Funktion der Wellenlänge stehen

- für diese Funktionen F( ) Amplitudenwerte N$_i$ (F( )) mit 1<i<n zu berechnen, die jeweils denen der entsprechenden Ausgangssignale des Sensors (10) für jede Zone i der Probe (5) mit einem Transmissionsfilter F( ) gleich sind, und diese Amplituden werden ausgehend von der Beziehung berechnet. In dieser definiert man die Parameter:

C( ) bezeichnet die spektrale Empfindlichkeit des Sensors (10),

M( ) bezeichnet die spektrale Empfindlichkeit des optischen Systems (4),

Ri( ) bezeichnet die spektrale Reflexion oder Transmission der Zone i,

$i_0$( ) bezeichnet die spektrale Intensitätsleistung der quelle (7), und sind zwei vorher ausgewählte begrenzte Wellenlängen,

I(F( )) ist ein für jede der Funktionen F( ) berechneter Schwächungsfaktor, so daß die Beleuchtungsintensität der Probe (5) mit dem nutzbaren Arbeitsbereich des Sensors (10) kompatibel ist und I(F( )) zwischen 0 und 1 liegt.

- für jede Funktion F( ) aus den entsprechenden Amplituden $N_i$ die Werte eines Faktors $Q_{ij}$ zu berechnen, der durch die Beziehung: mit $1 \leqq i \leqq n$ und $1 \leqq j \leqq n$ und $i < j$ definiert ist,

wobei jeder Wert des Faktors $Q_{ij}$ für den Kontrast zwischen den Zonen i und j repräsentativ ist und $N_{sat}$ die Amplitude des höchsten Signalwertes bezeichnet, den der Sensor (10), wenn er gesättigt ist, liefern kann.

- für jede Funktion F( ) einen Wert Q des Faktors $Q_{ij}$ auszuwählen, der dem gewünschten Kontrast entspricht und Qualitätsfaktor genannt wird,

- unter den Qualitätsfaktoren den Qualitätsfaktor Q auszuwählen, der es erlaubt, den Kontrast zu optimieren, wobei diese Optimierung die Transmission F ( ) des auszuwählenden Filters liefert,

- das ausgewählte Filter zwischen die Quelle (7) und die zu prüfende Probe (5) zu stellen, um ein Bild der Probe (5) zu erhalten.

2. Verfahren gemäß Anspruch 1, dadurch gekennzeichnet, daß die Parameter C( ), M( ), $i_0$( ) jeweils mit dem Sensor (10), dem optischen System (4) und der Quelle (7) geliefert oder jeweils bei einer vorhergehenden Eichung berechnet werden, wobei $R_i$( ) ein aus den optischen Parametern jeder Zone der Probe (5) berechneter oder mit Hilfe eines Spektrometers (13) von der Prüfung der Probe (5) gemessener Parameter ist.

3. Verfahren gemäß Anspruch 2, dadurch gekennzeichnet, daß der Abschwächungsfaktor I(F( )) für jede Funktion F( ) auf die Weise berechnet wird, daß der Maximalwert der Amplituden $N_i$ (F( )) gleich einem festen Wert $kN_{sat}$ mit $0 < k \leqq 1$ ist, wobei k ein vorbestimmter Wert ist und $N_{sat}$ der höchste Wert der Amplitude des Signals ist, das der Sensor (10) bei Sättigung liefern kann.

4. Verfahren gemäß Anspruch 2, dadurch gekennzeichnet, daß der Intensitätsfaktor I(F( )) auf die Weise berechnet wird, daß der Mittelwert der Amplituden $N_i$(F( )) gleich einem festen Wert $kN_{sat}$ mit $0 < k \leqq 1$ ist.

5. Verfahren gemäß einem der Ansprüche 3 und 4, dadurch gekennzeichnet, daß der Wert des Qualitätsfaktors Q, der es erlaubt, den Kontrast zu optimieren, dadurch erhalten wird, daß für jede Funktion F( ) aus den Werten der Faktoren $Q_{ij}$ der minimale Wert der $Q_{ij}$ ausgewählt wird und die dem Maximalwert dieser minimalen $Q_{ij}$-Werte entsprechende Funktion F( ) gewählt wird.

6. Verfahren gemäß einem der Ansprüche 3 und 4, dadurch gekennzeichnet, daß der Wert des Qualitätsfaktors Q, der es erlaubt, den Kontrast zu optimieren, dadurch erhalten wird, daß für jede Funktion F( ) aus den Werten $Q_{ij}$ der maximale Wert der $Q_{ij}$ ausgewählt wird und die dem Minimalwert dieser maximalen $Q_{ij}$-Werte entsprechende Funktion F( ) gewählt wird.

## Claims

1. Method for optimizing contrast in an image of a sample (5) to be controlled having a whole number n of zones i, with n>2 having various reflectance and transmittance coefficients, these zones being illuminated by a light source (7) and the image obtained at the output of an optical system (4) to be analysed by a sensor (10) supplying recording signals of this image on the outputs, characterized in that, prior to obtaining the image of the sample (5), it comprises:

- defining a set of functions $F(\lambda)$ each representing transmittance according to the wavelength of an optical filter to be inserted between the source (7) and the sample (5),

- calculating for these functions $F(\lambda)$ the amplitudes values Ni(F(λ)) with $1 < i < n$ which would be equal to those of the corresponding output signals of the sensor (10) respectively for each sample (5) zone i with a transmittance filter $F(\lambda)$, these amplitudes being calculated from the equation:

$$Ni(F(\lambda)) = I(F(\lambda)) \int_{\lambda A}^{\lambda B} C(\lambda).M(\lambda).F(\lambda).Ri \ (\lambda)i_o \ (\lambda)d$$

in which the following parameters are determined:

$C(\lambda)$ denotes the spectral response of the sensor (10)

$M(\lambda)$ denotes the spectral response of the optical system (4),

$Ri(\lambda)$ denotes the reflectance or spectral transmittance of the zone i,

$i_o(\lambda)$ denotes the power spectral density of the source (7),

$\lambda A$ and $\lambda B$ are the two preliminarily selected limiting wavelengths

$I(F\lambda))$ is the attenuation factor calculated for each of the functions $F(\lambda)$ so that the illumination power of the sample (5) is compatible with the effective functionning zone of the sensor (10) $(I(F\lambda))$ and is between 0 and 1,

- calculating for each function $F(\lambda)$ from the corresponding amplitudes Ni the values of one factor $Q_{ij}$ defined by the equation:

$$Q_{ij} = \frac{Ni - Nj}{N_{sat}}$$

with $1 \leqq i \leqq n$ and $1 \leqq j \leqq n$ and $i < j$,

each value of the factor $Q_{ij}$ being representative of the contrast between zones i and j and $N_{sat}$ denoting the signal amplitude with the highest value which the sensor (10) can supply when it is saturated.

- selecting for each function $F(\lambda)$ a value Q of the factor $Q_{ij}$ corresponding to the desired contrast and called the quality factor,

- selecting from amongst the quality factors the quality factor Q allowing for the contrast to be optimized, this optimization supplying the transmittance $F(\lambda)$ of the filter to be selected,

- inserting the selected filter between the source (7) and the sample (5) to be controlled so as to obtain the image of the sample (5).

2. Method according to claim 1, characterized in that the parameters $C(\lambda)$, $M(\lambda)$, $i_o(\lambda)$ are respectively supplied by the sensor (10), the optical system (4) and source (7) or respectirely calculated during preliminary standardization, $Ri(\lambda)$ being a parameter calculated from the optical parameters of each zone of the sample (5) or measured by means of a spectrophotometer (13) prior to controlling the sample (5).

3. Method according to claim 2, characterized in that the attenuation factor or $I(F(\lambda))$ is calculated for each function $F(\lambda)$ so that the amplitude maximum value $Ni(F(\lambda))$ is equal to a constant value $KN_{sat}$, with $0 < k \leqq 1$, k being a predetermined value and $N_{sat}$ being the signal highest amplitude value which can be supplied by the saturated sensor (10).

4. Method according to claim 2, characterized in that the power factor $I(F(\lambda))$ is calculated so that the amplitude average value $Ni(F(\lambda))$ is equal to a constant value $Kn_{sat}$, with $0 < k \leqq 1$.

5. Method according to either of claims 3 and 4, characterized in that the quality factor value Q allowing for optimization of the contrast is obtained by selecting for each function $F(\lambda)$ from amongst the values of factors $Q_{ij}$ the minimum value of $Q_{ij}$ and by choosing the function $F(\lambda)$ corresponding to the maximum of these minimum values of $Q_{ij}$.

6. Method according to either of claims 3 and 4, characterized in that the quality factor value Q allowing for optimization of contrast is obtained by selecting for each function $F(\lambda)$ from amongst the values $Q_{ij}$ the maximum value of $Q_{ij}$ and by choosing the function $F(\lambda)$ corresponding to the minimum of the maximum values of $Q_{ij}$.

FIG. 1

MEMORISATION DES PARAMETRES CARACTERISTIQUES
DE L'APPAREILLAGE   $C(\lambda)$, $M(\lambda)$, $io(\lambda)$ ⟶ *100*

DEFINITION ET MEMORISATION DE L'ENSEMBLE
DES FONCTIONS   $F(\lambda)$ PARMI LESQUELLES
ON VEUT SELECTIONNER L'OPTIMUM ⟶ *101*

MEMORISATION DES CARACTERISTIQUES DE L'ECHANTILLON ⟶ *102*
. NOMBRE $n$ DE ZONES $i$
. REFLECTANCE OU TRANSMITTANCE $Ri(\lambda)$

1ère FONCTION $F(\lambda)$ ⟶ *103*

*105*
CALCUL DES AMPLITUDES $Ni*(F(\lambda))$
NON NORMALISEES

*106*          *104*

CALCUL DU FACTEUR $I(F(\lambda))$
ET DES AMPLITUDES $Ni(F(\lambda))$ NORMALISEES
POUR QUE LE CAPTEUR FONCTIONNE
DANS SA ZONE UTILE

FONCTION $F(\lambda)$
SUIVANTE

CALCUL DU FACTEUR $Qij(F(\lambda))$
POUR LES ZONES $i$ ET $j$ ⟶ *107*

*108*
$F(\lambda)$
DERNIERE FONCTION ?          NON

OUI

*109*
SELECTION DU Q OPTIMAL
ET DE LA FONCTION $F(\lambda)$ CORRESPONDANTE
AINSI   QUE $I(F(\lambda))$ CORRESPONDANT A $F(\lambda)$

FIG. 2